Europäisches Patentamt
European Patent Office
Office européen des brevets

(19)

(11) Numéro de publication: **0 360 683 A1**

(12) # DEMANDE DE BREVET EUROPEEN

(21) Numéro de dépôt: **89402558.4**

(22) Date de dépôt: **19.09.89**

(51) Int. Cl.[5]: **C 09 K 19/30**
C 09 K 19/20

(30) Priorité: **23.09.88 FR 8812461**

(43) Date de publication de la demande:
**28.03.90 Bulletin 90/13**

(84) Etats contractants désignés: **CH DE GB LI NL**

(71) Demandeur: **THOMSON-CSF**
**51, Esplanade du Général de Gaulle**
**F-92800 Puteaux (FR)**

(72) Inventeur: **Baillon-Moussel, Christin**
**THOMSON-CSF SCPI-Cédex 67**
**F-92045 Paris la Défense (FR)**

**Broussoux, Dominique**
**THOMSON-CSF SCPI-Cédex 67**
**F-92045 Paris la Défense (FR)**

**Dubois, Jean-Claude**
**THOMSON-CSF SCPI-Cédex 67**
**F-92045 Paris la Défense (FR)**

**Le Barny, Pierre**
**THOMSON-CSF SCPI-Cédex 67**
**F-92045 Paris la Défense (FR)**

(74) Mandataire: **Grynwald, Albert et al**
**THOMSON-CSF - S.C.P.I. 51, epsplanade du Général-de-Gaulle**
**F-92045 Paris La Défense, Cedex 67 (FR)**

(54) **Cristaux liquides à structure chirale dérivés du dihydroxy 4,4' biphényle.**

(57) L'invention concerne une nouvelle famille de composés organiques à structure chirale répondant à la formule générale suivante :

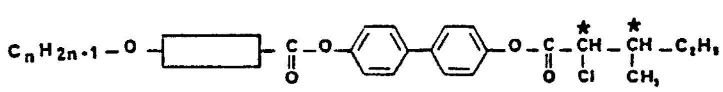

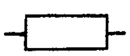 étant soit un cycle cyclohexane 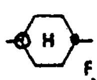 et dans ce cas X = rien, soit un cycle fluorobenzénique 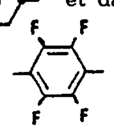 et dans ce cas X = -O-, avec 2 ≤ n ≤ 14.

Application aux dispositifs d'affichage à cristaux liquides smectiques C chiraux.

EP 0 360 683 A1

## Description

## CRISTAUX LIQUIDES A STRUCTURE CHIRALE DERIVES DU DIHYDROXY 4, 4′ BIPHENYLE

L'invention concerne une nouvelle famille de composés organiques à structure chirale dérivés du dihydroxy 4, 4′ biphényle et présentant au moins une phase smectique A ou une phase cholestérique. Cette nouvelle famille peut être divisée en deux groupes selon la nature d'un noyau faisant partie de la molécule.

L'invention concerne également le procédé de fabrication de ces composés et les produits smectiques C chiraux obtenus par mélange à partir des composés organiques selon l'invention.

Les dispositifs d'affichage utilisant les cristaux liquides smectiques C chiraux nécessitent l'obtention d'un matériau à réponse rapide. Ce temps de réponse t est donné de façon simplifiée par la relation

$$t = \frac{\eta}{P_s . E}$$

où η représente la viscosité rotationnelle du cristal liquide, $P_s$ sa polarisation spontanée et E la champ électrique appliqué. Les matériaux les plus intéressants sont ceux qui présentent une forte polarisation spontanée associée à une faible viscosité rotationnelle.

Les matériaux à forte polarisation sont obtenus, selon l'art connu, en plaçant le carbone asymétrique aussi proche que possible du coeur mésogène et en attachant directement un groupe à fort moment dipolaire permanent sur le carbone asymétrique.

Pour obtenir cette forte polarisation spontanée, la molécule des composés selon l'invention possède un atome de chlore relié directement à un carbone asymétrique, ce dernier étant à deux atomes du coeur de la molécule.

La demanderesse a constaté que l'introduction soit d'un cycle cyclohexane, soit d'un cycle fluorobenzénique dans ces composés organiques permet, en comparaison avec un noyau benzénique, de baisser la viscosité. Les composés selon l'invention possède donc l'un ou l'autre cycle, ce qui définit les deux groupes susmentionnés.

Afin de satisfaire toutes les exigences requises pour les matériaux des affichages smectiques C chiraux stabilisés par les parois, la tendance actuelle est de doper des mélanges smectiques C avec des molécules à structure chirale. Les molécules de dopants chiraux induisent dans le mélange chiralité et polarisation. Le mélange smectique C doit apporter les autres propriétés c'est-à-dire la largeur de gamme smectique C, la faible viscosité, la présence d'une phase cholestérique et d'une phase smectique A au-dessus de la phase smectique C pour faciliter l'alignement, l'anisotropie diélectrique négative et l'anisotropie optique Δ n adaptée à l'épaisseur de la cellule (exemple Δ n = 0,14 pour une épaisseur de cellule de 2μ).

Certains composés selon l'invention ne présentent pas eux-mêmes de phase smectique C chirale, mais il est possible de les utiliser en mélange avec un cristal liquide smectique C (comme dopant de ce mélange).

Dans le cadre d'une utilisation en mélange, les produits de l'invention, du fait de leur structure chimique à faible viscosité, sont très avantageux.

D'autre part, certains des composés de l'invention possèdent une phase smectique A et peuvent donc être utilisés dans le cadre de l'effet électronique.

L'invention a donc pour objet un cristal liquide à structure chirale, caractérisé en ce qu'il répond à la formule chimique générale suivante :

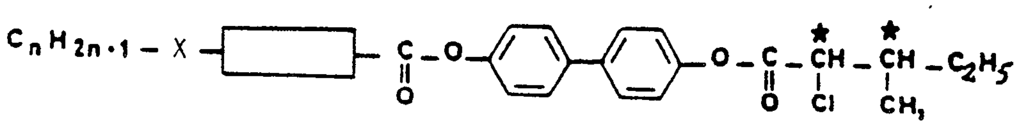

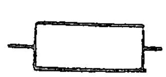

étant soit un cycle cyclohexane

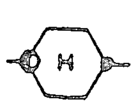

et dans ce cas X = rien, soit un cycle fluorobenzénique

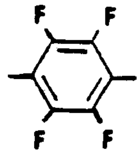

et dans ce cas X = -O- avec 2 ≦ n ≦ 14.

L'invention a aussi pour object un procédé de fabrication du cristal liquide défini ci-dessus dans le cas où

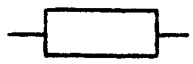

est un cycle cyclohexane

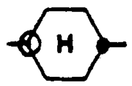 ,

caractérisé en ce qu'il comprend les étapes suivantes :

- 1ère étape : synthèse de l'acide trans-4 alkyl cyclohexane carboxylique à partir de l'acide 4-alkyl benzoïque par hydrogénation en présence de nickel de Raney, le composé trans étant séparé du composé cis par formation d'un produit d'inclusion avec la thiourée,
- 2ème étape : obtention du chlorure d'acide trans 4 alkyl cyclohexane carboxylique par action du chlorure d'oxalyle sur l'acide trans 4-alkyl cyclohexane carboxylique,
- 3ème étape : synthèse de l'acide 2S, 3S chloro-2 méthyl-3 pentanoïque à partir de la L- isoleucine par désamination nitreuse puis action de l'acide chlorhydrique,
- 4ème étape : obtention du 2S, 3S chloro-2 méthyl-3 pentanoate d'hydroxy-4'biphényle par estérification de l'acide 2S, 3S chloro-2 méthyl-3 pentanoïque et du dihydroxy-4, 4' biphényle par la méthode de couplage à la DCCI,
- 5 ème étape : obtention du (trans alkyl-4 cyclohexylcarbonyloxy)4'- (chloro-2 méthyl-3 pentanoyloxy)4''-biphényle à partir des composés obtenue à l'issue des étapes 2 et 4.

L'invention a encore pour objet un procédé de fabrication du cristal liquide défini ci-dessus dans le cas où

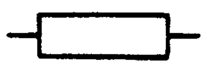

est un cycle fluorobenzénique

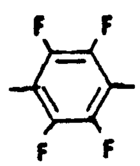 ,

caractérisé en ce qu;il comprend les étapes suivantes :

- 1ère étape : synthèse de l'acide 4-alkoxyfluorbenzoïque à partir d'un alcool et de l'acide fluorbenzoïque,
- 2ème étape : obtention du chlorure de l'acide formé à l'issue de la première étape par action du chlorure d'oxalyle,
- 3ème étape : synthèse de l'acide 2S, 3S chloro-2 méthyl-3 pentanoïque à partir de la L- isoleucine par désamination nitreuse puis action de l'acide chlorhydrique,
- 4ème étape : obtention du 2S, 3S chloro-2 méthyl-3 pentanoate d'hydroxy-4'biphényle par estérification de l'acide 2S, 3S chloro-2 méthyl-3 pentanoïque et du dihydroxy-4, 4' biphényle par la méthode de coulage à la DCCI,
- 5ème étape : obtention de l'(alkoxy-4 fluorobenzoyloxy)4'- (chloro-2 méthyl-3 pentanoyloxy) 4''-biphényle à partir des composés obtenus à l'issue des étapes 2 et 4.

L'invention a enfin pour objet un cristal liquide smectique C chiral, caractérisé en ce qu'il résulte du mélange d'un cristal liquide tel que défini ci-dessus et d'un cristal liquide smectique C.

L'invention sera mieux comprise et d'autres avantages apparaîtront à l'aide de la description qui va suivre, donnée à titre non limitatif, et grâce aux figures annexées parmi lesquelles :

- les figures 1 et 2 sont des diagrammes représentant le temps de réponse en fonction du champ électrique appliqué, de cristaux liquides comprenant des composés d'un premier groupe selon l'invention,

- les figures 3 et 4 sont des diagrammes représentant le temps de réponse en fonction du champ électrique appliqué, de cristaux liquides comprenant des composés d'un deuxième groupe selon l'invention.

Le premier groupe de composés (A) répond à la formule générale suivante :

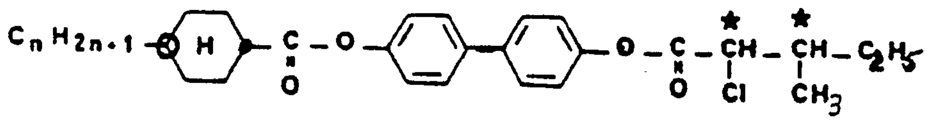

avec 2 ≦ n ≦ 14 (trans alkyl-4 cyclohexylcarbonyloxy)4'- (chloro-2 méthyl -3 pentanoyloxy)4"-biphényle.

Le deuxième groupe de composés (B) répond à la formule générale suivante :

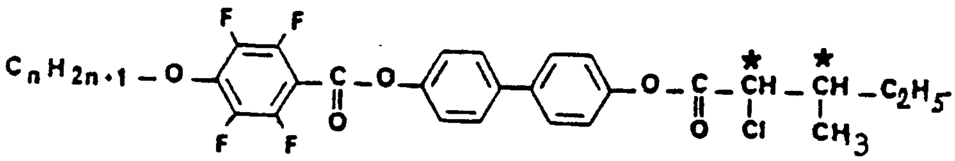

avec 2 ≦ n ≦ 14 (alkoxy-4 fluorobenzoyloxy)4'- (chloro-2 méthyl-3 pentanoyloxy)4" biphényle.

Ce qui suit porte sur le procédé général de synthèse, et sur les propriétés de certains composés ainsi que des mélanges obtenus à partir du mélange MERCK servant ici uniquement comme moyen de caractérisation.

PROCEDES DE SYNTHESE

Groupe A

Le premier groupe de composés organiques de l'invention peut être obtenu en 5 étapes à partir de produits commerciaux tels que la L- isoleucine et les acides 4-alkyl benzoïques, selon le schéma réactionnel suivant :

. Réaction 1 : synthèse de l'acide trans-4 alkyl cyclohexane carboxylique à partir de l'acide 4-alkyl benzoïque par hydrogénation en présence de nickel de Raney, le composé trans étant séparé du composé cis par formation d'un produit d'inclusion avec la thiourée.

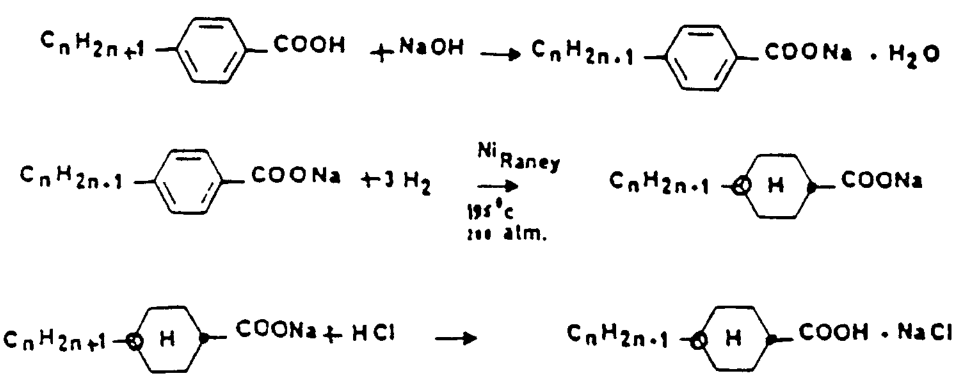


. Réaction 2 : obtention du chlorure d'acide trans 4-alkyl carboxylique par action du chlorure d'oxalyle sur l'acide trans 4- alkyl cyclohexane carboxylique.

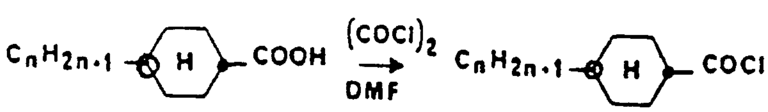


. Réaction 3 : synthèse de l'acide 2S, 3S chloro-2, méthyl -3 pentanoïque à partir de la L-isoleucine par désamination nitreuse puis action de l'acide chlorhydrique.

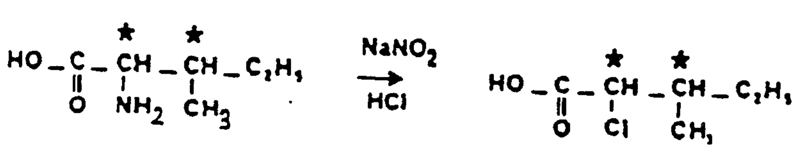


. Réaction 4 : obtention du 2S, 3S chloro-2 méthyl-3 pentanoate d'hydroxy-4' biphényle par

estérification de l'acide 2S, 3S chloro-2 méthyl-3 pentanoïque et du dihydroxy-4, 4′ biphényle par la méthode de couplage à la DCCl.

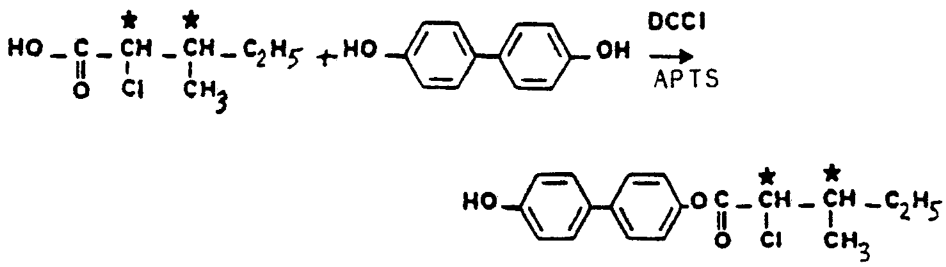


. Réaction 5 : obtention du (trans alkyl-4 cyclohexylcarbonyloxy) 4′- (chloro-2 méthyl-3 pentanoyloxy) 4″- biphényle à partir des composés obtenus par la réaction 2 et la réaction 4.

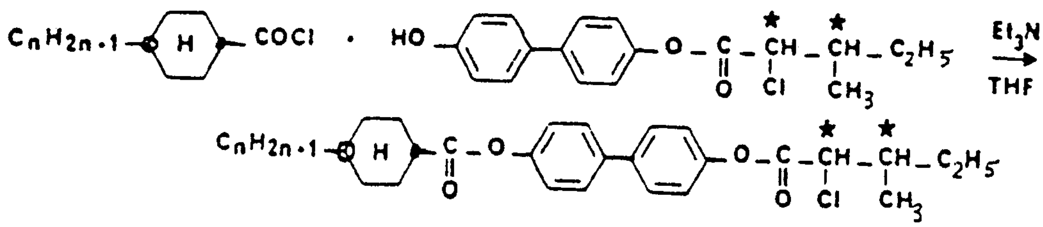


Groupe B

Le deuxième groupe de composés organiques selon l'invention peut être obtenue en 5 étapes à partir de produits commerciaux tels que la L- isoleucine, et l'acide fluorobenzoïque.

. Réaction 1 : l'acide 4- alkoxyfluorobenzoïque est préparé à partir d'un alcool et de l'acide fluorobenzoïque.

$$C_nH_{2n+1}-OH + Na \longrightarrow C_nH_{2n+1}-ONa + H_2$$

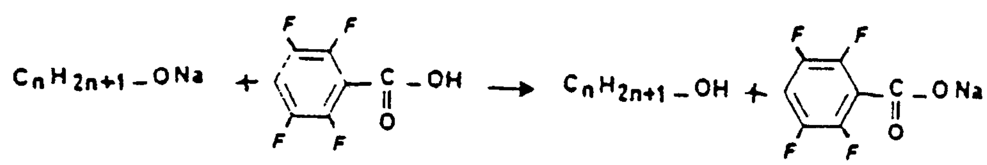

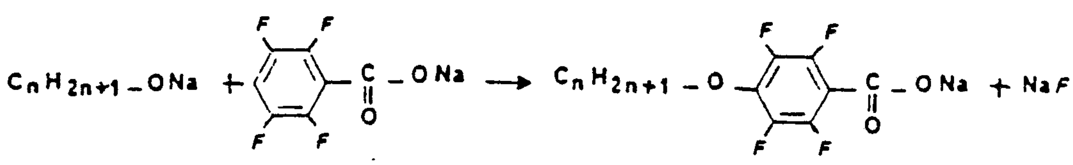

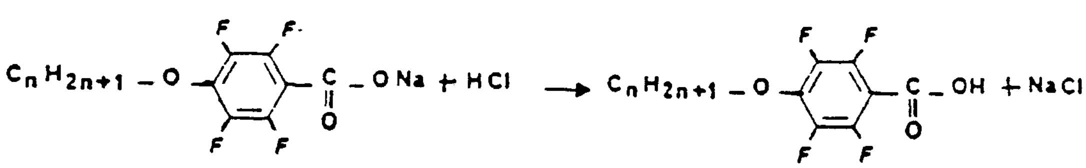

. Réaction 2 : passage de l'acide au chlorure d'acide par action du chlorure d'oxalyle.

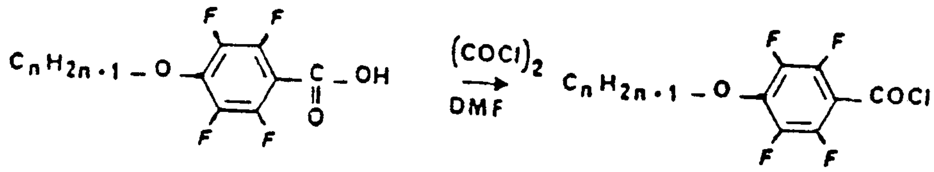


. Réaction 3 : elle est identique à la réaction 3 du premier groupe.

. Réaction 4 : elle est identique à la réaction 4 du premier groupe.

. Réaction 5 : estérification en présence de triéthylamine des composés obtenue par la réaction 2 et la réaction 4 selon le même mode opératoire que celui de la réaction 5 pour le groupe de composés (A).

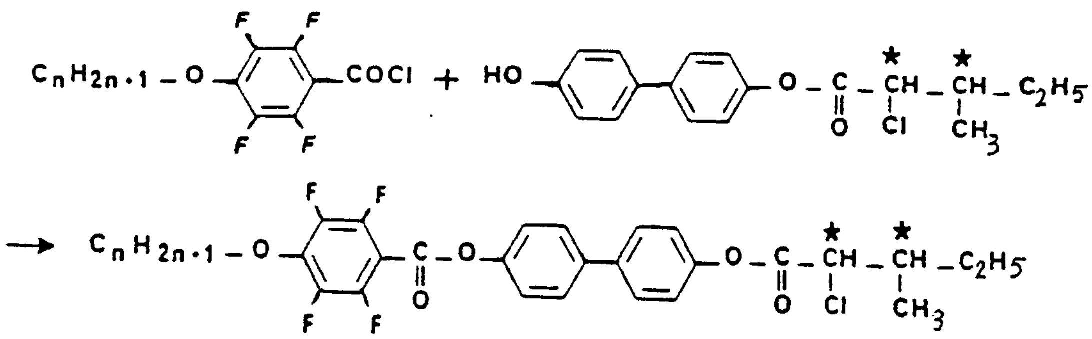

## MODES OPERATOIRES

### Groupe A

. Réaction 1 :

Dans un bécher muni d'un agitateur magnétique, sont introduits 80 ml d'eau et 0,0525 mole de soude. Lorsque la solution est homogène, on y ajoute 0,05 mole d'acide 4-alkyl benzoïque. L'ensemble est agité jusqu'à dissolution complète.

La solution ainsi obtenue d'alkyl benzoate de sodium est introduite dans l'autoclave. On y ajoute environ 3 grammes de nickel de Raney.

L'autoclave est fermé puis purgé à l'azote. L'hydrogène est introduit jusqu'à obtenir une pression de 100 atmosphères. La température est portée jusqu'à 195°C pendant 20 heures. Puis on laisse refroidir en on ramène l'autoclave à pression atmosphérique.

L'alkyl cyclohexane carboxylate de sodium est peu soluble dans l'eau à 20°C. La solution est donc chauffée à 90°C puis filtrée à chaud pour éliminer le nickel.

Le filtrat est acidifié avec HCl 25 %. La solution aqueuse est extraite à l'éther. La phase éthérée est lavée à l'eau jusqu'à neutralité, puis séchée sur Mg $SO_4$, filtrée et évaporée sous vide.

Le produit brut est dissous dans 58 ml de méthanol auxquels sont ajoutés 9,75 g de thiourée. L'ensemble est chauffé jusqu'à dissolution puis refroidi à température ambiante. Un précipité apparaît qui est filtré (F1).

Le filtrat est évaporé à sec, on lui ajoute 68 ml de méthanol et 7,70 g de thiourée. L'ensemble est chauffé jusqu'à dissolution, puis refroidi jusqu'à 5°C. le précipité (F2) est filtré.

Le filtrat est évaporé à sec, on lui ajoute 25 ml de méthanol, l'ensemble est chauffé jusqu'à dissolution complète, puis refroidi à 5°C. Le précipité (F3) est filtré.

Le filtrat est évaporé à sec, on lui ajoute 12 ml de méthanol, l'ensemble est chauffé jusqu'à dissolution complète puis refroidi jusqu'à 2°C. Le précipité (F4) est filtré.

Les fractions F1, F2, F3 et F4 sont mises en solution dans 500 ml de KOH à 5 %. La solution est acidifiée avec HCl 25 %. Un précipité se forme.

L'acide est extrait à l'éther.

La phase éthérée est lavée à l'eau jusqu'à neutralité, puis séchée sur $MgSO_4$ et évaporée sous vide.

L'acide obtenu est recristallisé dans l'acétone. On récupère 0,015 mole de produit.

Rendement de la réaction : 28,5 %.

. Réaction 2 :

Dans un erlenmeyer sont introduits successivement 2,75 mmoles d'acide, 2,17 mmole de chlorure d'oxalyle et une goutte de diméthylformamide (DMF),

L'ensemble est laissé sous agitation 30 minutes à température ambiante.

L'excès de chlorure d'oxalyle est évaporé sous vide, le produit obtenu est utilisé tel quel dans la réaction 5.

. Réaction 3 :

0,2 mole d'acide aminé sont chargées dans un erlenmeyer avec 106 ml d'HCl 12 N dans 106 ml d'eau. L'ensemble est refroidi à 0° C.

0,24 ml de nitrite de sodium dissous dans le minimum d'eau sont ajoutés en 30 minutes.

L'ensemble est laissé deux heures sous agitation à 0° C.

Le produit est extrait à l'éther (cette phase éthérée n'est pas lavée à l'eau mais séchée et évaporée).

. Réaction 4 :

5,4 mmoles de dihydroxy 4,4′ biphényl, 4,85 ml de pyridine, 0,05 g d'acide paratoluene sulfonique et 5,94 mmoles d'acide 2S, 3S chloro-2 méthyl-3 pentanoïque sont chargés dans un erlenmeyer muni d'un agitateur.

La DCCl (6,48 mmoles) est ensuite ajourée goutte à goutte. Un précipité important se forme.

L'ensemble est laissé 12 heures à température ambiante.

0,54 ml d'acide acétique sont ajoutés dans le milieu et l'erlenmeyer est placé en réfrigérateur pendant environ 3 heures.

Le précipité est alors filtré et lavé avec du chloroforme froid. Du chloroforme et de la glace sont ajoutés au filtrat. L'ensemble est acidifié avec HCl 5 M. Les phases aqueuses et organiques sont séparées. La phase organique est séchée sur Mg $SO_4$ puis évaporée.

Le brut est purifié sur silice avec le chloroforme comme éluant.

Rendement de la réaction : 25%.

. Réaction 5 :

Le chloro-2 méthyl-3 pentanoate d'hydroxy 4′ biphenyle (2,5 mmoles) est dissous dans 4 ml de tétrahydrofuranne (THF) et 0,5 ml de triéthylamine. L'ensemble est refroidi à 0° C.

Le chlorure d'acide (réaction 2) est ajouté goutte à goutte dans 1 ml de THF. Il y a apparition d'un précipité.

L'ensemble est laissé à température ambiante pour deux jours. Le précipité est filtré, lavé au benzène. Le filtrat est évaporé à sec, puis dissous dans l'éther.

La phase éthérée est lavée par une solution diluée de HCl, puis à l'eau et séchée sur Mg $SO_4$, puis évaporée à sec.

Le produit brut est purifié sur colonne de silice avec élution au chloroforme.

Rendement 23 %.

Groupe B

. Réaction 1 : Exemple de synthèse de l'acide 4 nonyloxy fluorobenzoïque.

Dans un erlenmeyer de 1l, muni d'une agitation magnétique on introduit 350 ml de nonanol fraîchement distillé, puis 4,6 g de sodium décapé. On chauffe à 60° C en agitant, jusqu'à disparition du sodium métallique.

Parallèlement, on dissout 21,2 g d'acide pentafluorobenzoïque dans 200 ml de nonanol-1 portés à 40° C.

On laisse revenir à température ambiante puis on verse le milieu réactionnel dans 800 ml d'eau permutée. On acidifie avec HCl 25 % jusqu'à pH 2.

On extrait à l'éther et on lave la phase organique à l'eau jusqu'à neutralité. Elle est séchée sur sulfate de magnésium, filtrée et évaporée sous vide.

Le nonanol en excès est éliminé par distillation sous vide. On recueille dans le bouilleur un liquide brun visqueux qui cristallise dans l'hexane à -18° C. Le précipité obtenu est filtré puis lavé à l'hexane froid et enfin recristallisé dans l'hexane. On obtient 4,93 g d'acide (rendement 14,7 %, point de fusion : 57° C).

. Les réactions 2 à 5 ne posent pas de problème particulier.

PROPRIETES DES CORPS SYNTHETISES

Les tableaux I et II, placés en fin de description, rassemblent les résultats des études calorimétrique et microscopique effectuées sur les composés selon l'invention.

Le tableau I se rapporte à des composés du Groupe A (incorporant un cycle cyclohexane) pour lesquels n prend les valeurs 5, 7, 9 et 12. Le tableau II se rapporte à des composés du Groupe B (incorporant un cycle fluorobenzénique) pour lesquels n prend les valeurs 5, 6, 8 et 9.

Les températures sont en degrés Celsius et les appellations K, SmA, SmB, SmC*, N* et I désignent respectivement les phases cristallines, smectiques A, B et C chirales, cholestériques et isotropes.

Un tiret dans le tableau signifie que la phase correspondante n'a pas été observée. Un astérisque indique l'existence de la phase. Les valeurs de température entre parenthèses caractérisent les phases monotropes. La nature des mésophases a été déterminée par l'étude de l'isomorphisme au microscope optique.

A titre d'exemple, le composé du tableau I pour lequel n = 5 est smectique B jusqu'à 126,5° C, smectique A de 126,5° C à 155° C, cholestérique de 155° C à 162,6° C et isotrope au-dessus de 162,6° C.

Les composés suivant l'invention ont été introduits dans un mélange smectique C Merck ZLI 3234 B possédant la succession de phases suivantes

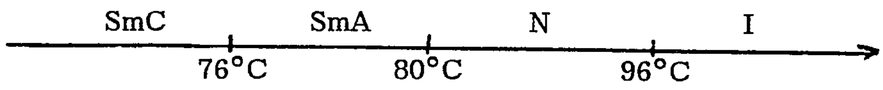


On connaît d'autre part les formules générales de deux des composés contenus dans ce mélange Merck, à savoir :

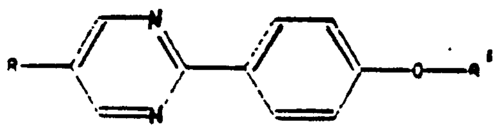

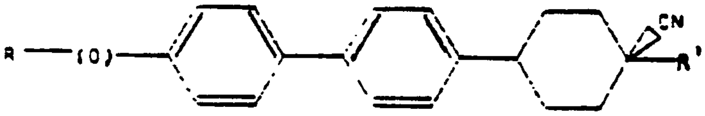

où R et R′ sont des groupements alkyles.

Le tableau III, placé en fin de description, rassemble les résultats obtenus pour l'analyse calométrique et microscopique des mélanges obtenus en introduisant 10 % en poids des composés du Groupe A dans le produit Merck. Les appellation SmC* et SmA représentent respectivement des phases smectique C chirale et smectique A.

Les dopants chiraux imposent la chiralité au mélange Par contre, la largeur de gamme smectique C du produit Merck n'est pratiquement pas modifiée.

Les temps de réponse de certains des composés des Groupes A et B, mélangés au produit Merck à raison de 10 % en poids du mélange, ont été mesurés à 30°C en fonction de la tension appliquée. Le temps de réponse est défini par la largeur à mi-hauteur du pic de ferroélectricité.

Le diagramme de la figure 1 représente le temps de réponse $\tau$ en fonction du champ électrique E appliqué pour un mélange comprenant un composé du Groupe A pour lequel $n = 5$.

Le diagramme de la figure 2 représente le temps de réponse $\tau$ en fonction du champ électrique E appliqué pour un mélange comprenant un composé du Groupe A pour lequel $n = 7$.

Les résultats de la mesure à 30° C de la polarisation spontanée de certains composés du Groupe A sont les suivants :

pour $n = 5$, $P_s = 13$ nC/cm$^2$
pour $n = 7$, $P_s = 11{,}2$ nC/cm$^2$
pour $n = 9$, $P_s = 10{,}7$ nC/cm$^2$
pour $n = 12$, $P_s = 8$ nC/cm$^2$.

Le diagramme de la figure 3 représente le temps de réponse $\tau$ en fonction du champ électrique E appliqué pour un mélange comprenant un composé du Groupe B pour lequel $n = 5$.

Le diagramme de la figure représente le temps de réponse $\tau$ en fonction du champ électrique E appliqué pour un mélange comprenant un composé du Groupe B pour lequel $n = 6$.

Les résultats de la mesure à 30° C de la polarisation spontanée de certains composés du Groups B sont les suivants :

pour $n = 5$, $P_s = 12$ nC/cm$^2$
pour $n = 6$, $P_s = 12{,}6$ nC/cm$^2$.

TABLEAU I

| n | K | SmB | SmA | N* | I |
|---|---|---|---|---|---|
| 5 | - | *126,5 | *155 | *162,6 | * |
| 7 | *47,2 | *139,8 | * | -159,9 | * |
| 9 | *52,1 | *139,8 | * | -161,8 | * |
| 12 | *66,9 | *132,5 | * | -154,4 | * |

TABLEAU II

| n | K | SmC* | N* | I |
|---|---|---|---|---|
| 5 | *72,1 | - | * 100,7 | * |
| 6 | *62,7 | * (54,07) | * 110,5 | * |
| 8 | *62,6 | * 68,9 | * 114,6 | * |
| 9 | *70,8 | * 74,6 | * 107,1 | * |

TABLEAU III

| n | SmC* | SmA | N* | I |
|---|---|---|---|---|
| 5 | * 75,7 | * 86,0 | * 102,0 | * |
| 7 | * 75 | * 86,5 | * 101,9 | * |
| 9 | * 73,4 | * 87 | * 100,8 | * |
| 12 | * 73,8 | * 80 | * 95,9 | * |

**Revendications**

1 - Cristal liquide à structure chirale, caractérisé en ce qu'il répond à la formule chimique générale suivante :

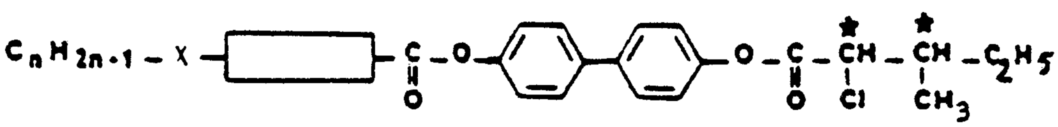

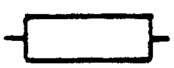

étant soit un cycle cyclohexane

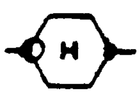

et dans ce cas X = rien, soit un cycle fluorobenzénique

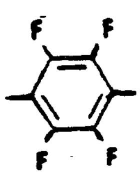 et

dans ce cas X = -O-, avec 2 ≦ n ≦ 14.

2 - Procédé de fabrication d'un cristal liquide selon la revendication 1 dans le cas où

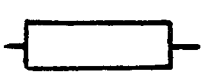

est un cycle cyclohexane

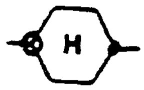 ,

caractérisé en ce qu'il comprend les étapes suivantes :

- 1ère étape : synthèse de l'acide trans-4 alkyl cyclohexane carboxylique à partir de l'acide 4-alkyl benzoïque par hydrogénation en présence de nickel de Raney, le composé trans étant séparé du composé cis par formation d'un produit d'inclusion avec la thiourée,
- 2ème étape : obtention du chlorure d'acide trans 4 alkyl cyclohexane carboxylique par action du chlorure d'oxalyle sur l'acide trans 4-alkyl cyclohexane carboxylique,
- 3ème étape : synthèse de l'acide 2S, 3S chloro-2 méthyl-3 pentanoïque à partir de la L- isoleucine par désamination nitreuse puis action de l'acide chlorhydrique,
- 4ème étape : obtention du 2S, 3S chloro-2 méthyl-3 pentanoate d'hydroxy-4'biphényle par estérification de l'acide 2S, 3S chloro-2 méthyl-3 pentanoïque et du dihydroxy-4, 4' biphényle par la méthode de couplage à la DCCl,
- 5ème étape : obtention du (trans alkyl-4 cyclohexylcarbonyloxy)4'- (chloro-2 méthyl-3 pentanoyloxy)4"-biphényle à partir des composés obtenus à l'issue des étapes 2 et 4.

3 - Procédé de fabrication d'un cristal liquide selon la revendication 1 dans le cas où

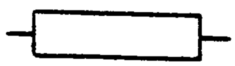

est un cycle fluorobenzénique

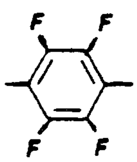 ,

caractérisé en ce qu'il comprend les étapes suivantes :

- 1ère étape : synthèse de l'acide 4-alkoxyfluorobenzoïque à partir d'un alcool et de l'acide fluorobenzoïque,
- 2ème étape : obtention du chlorure de l'acide formé à l'issue de la première étape par action du chlorure d'oxalyle,
- 3ème étape : synthèse de l'acide 2S, 3S chloro-2 méthyl-3 pentanoïque à partir de la L- isoleucine par désamination nitreuse puis action de l'acide chlorhydrique,
- 4ème étape : obtention du 2S, 3S chloro-2 méthyl-3 pentanoate d'hydroxy-4'biphényle par estérification de l'acide 2S, 3S chloro-2 méthyl-3 pentanoïque et du dihydroxy-4, 4' biphényle par la méthode de couplage à la DCCl,
- 5ème étape : obtention de l'(alkoxy-4 fluorobenzoyloxy)4'-(chloro-2 méthyl-3 pentanoyloxy)4"-biphényle à partir des composés obtenus à l'issue des étapes 2 et 4.

4 - Cristal liquide smectique C chiral, caractérisé en ce qu'il résulte du mélange d'un cristal liquide selon la revendication 1 et d'un cristal liquide smectique C.

FIG_1

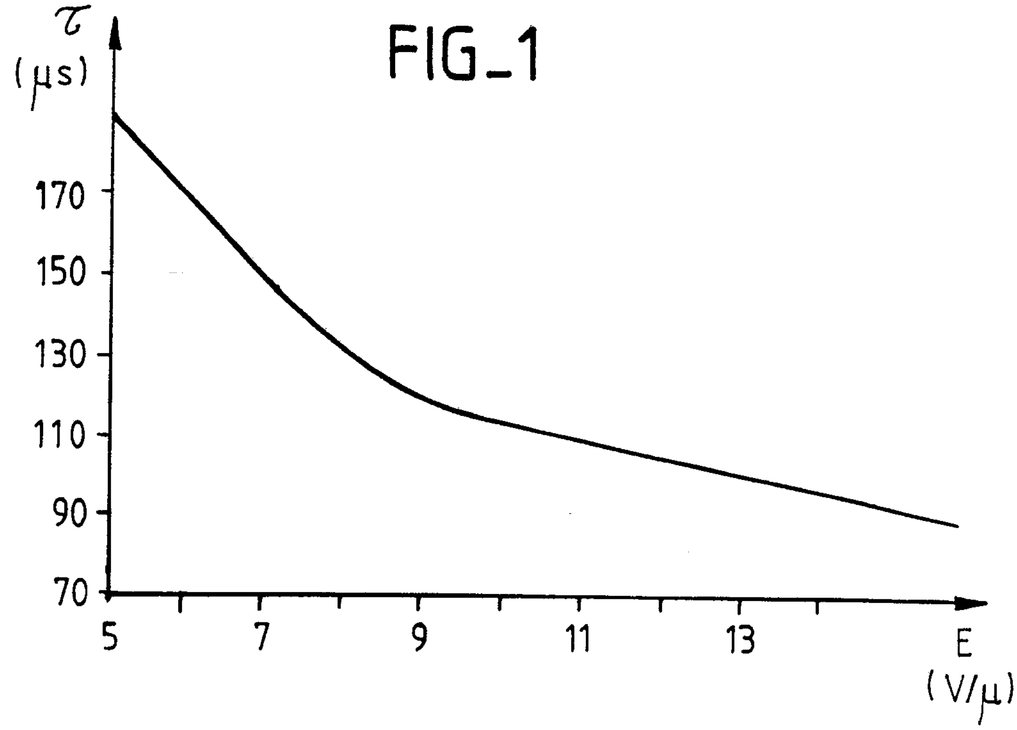
τ
(μs)
170
150
130
110
90
70
5
7
9
11
13
E
(V/μ)

FIG_2

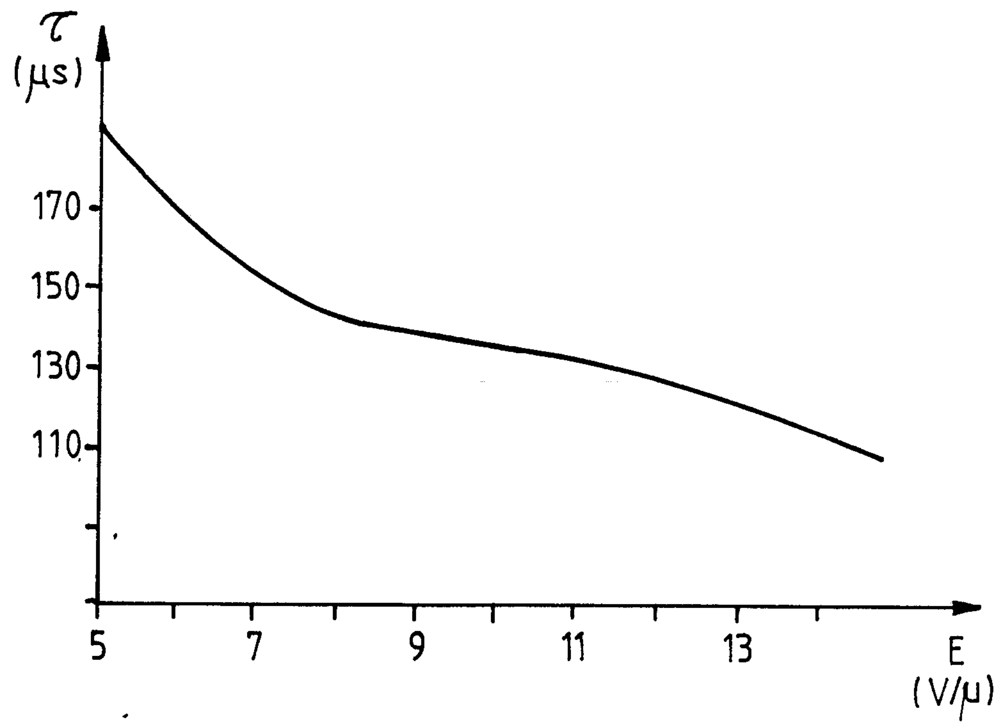
τ
(μs)
170
150
130
110
5
7
9
11
13
E
(V/μ)

FIG_3

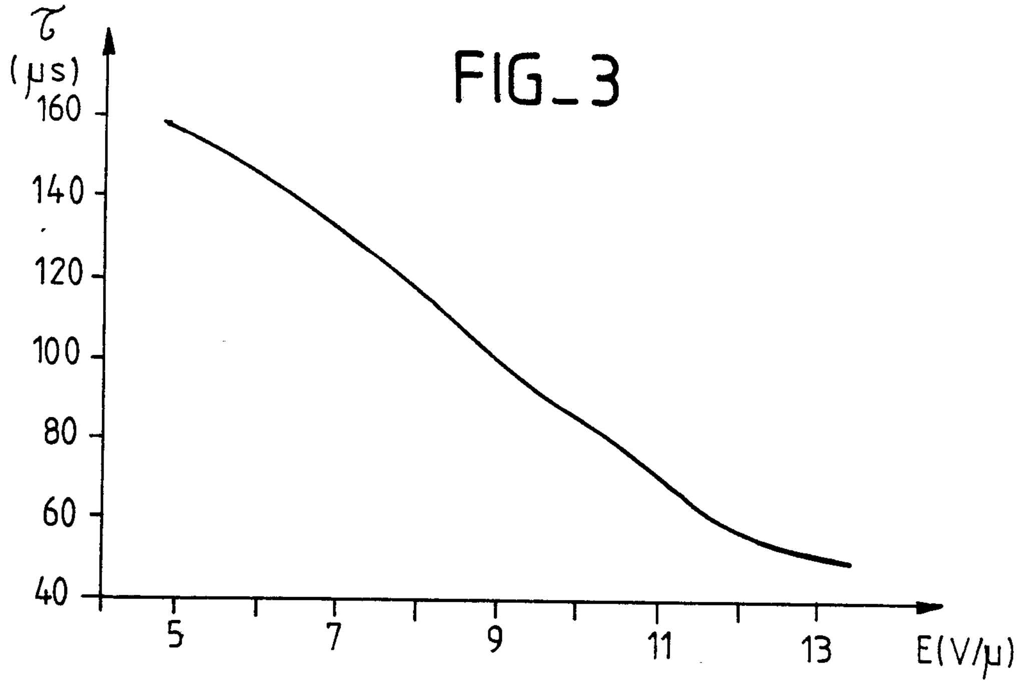
τ
(μs)
160
140
120
100
80
60
40
5
7
9
11
13
E(V/μ)

FIG_4

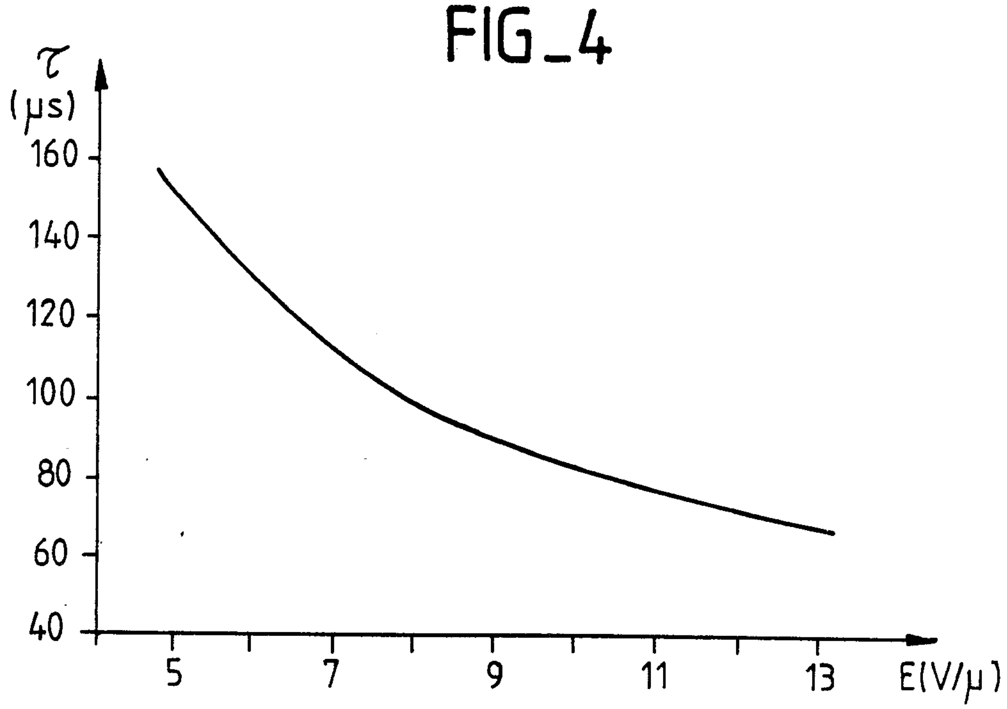
τ
(μs)
160
140
120
100
80
60
40
5
7
9
11
13
E(V/μ)

Office européen des brevets

# RAPPORT DE RECHERCHE EUROPEENNE

Numero de la demande

EP 89 40 2558

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | EP-A-0 011 002 (THOMSON CSF)<br>* Page 1, lignes 1-26; page 2, lignes 1-8; revendications 1-8 * | 1-4 | C 09 K 19/30<br>C 09 K 19/20 |
| Y | EP-A-0 191 600 (AJINOMOTO)<br>* Exemples 14,15,16; revendications 1-8 * | 1,4 | |
| Y | GB-A-2 182 037 (V.E.B.)<br>* Page 1, ligne 65; page 2, lignes 1-22; exemple 3; page 7, tableau 9; revendications 1-9 * | 1,4 | |
| X,Y | MOLECULAR CRYSTALS & LIQUID CRYSTALS, vol. 146, 1987, pages 151-171, Gordon and Breach Science Publishers S.A., Montreaux, CH; K. MOHR et al.: "A family of ferroelectric liquid crystals with very high spontaneous polarization"<br>* Page 154, tableau I; page 155, tableau II; page 157, tableaux VII, VIII * | 1,2 | |

DOMAINES TECHNIQUES RECHERCHES (Int. Cl.5)

C 09 K

Le présent rapport a été établi pour toutes les revendications

| Lieu de la recherche | Date d'achèvement de la recherche | Examinateur |
|---|---|---|
| LA HAYE | 17-11-1989 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant